# EUROPEAN PATENT APPLICATION

(11) **EP 4 696 591 A1**
(43) Date of publication of application: **18.02.2026**
(21) Application number: 25195841.9
(22) Date of filing: 14.08.2025
(51) Int. Cl.: B62D 21/15, B62D 33/06, B60R 19/12, B60R 19/18, B62D 25/10, B60R 19/24

(54) **A TRUCK COMPRISING A CABIN STRUCTURE**

(30) Priority: 15.08.2024 NL 2038441
(71) Applicant: DAF Trucks N.V., 5643 TW Eindhoven (NL)
(72) Inventor: VAN GALEN, Haro, 5643 TW Eindhoven (NL)
(74) Representative: V.O.

(57) **Abstract**

The cabin structure of a truck (1) comprises a cabin floor (3), opposing A-pillars (4, 4'), a front side extending between the opposing A-pillars and a crash absorption system (6) arranged for absorbing an impact force on the front side in case of a collision. The crash absorption system (6) is positioned at the front side at a vertical level above the cabin floor (3). The crash absorption system comprises a bow shaped impact beam (9) which is positioned between the opposing A-pillars (4, 4') and which is connected to the cabin structure by means of impact beam hinges (10) for hinging the bow shaped impact beam (9) from an operative position ready for absorbing an impact force on the front side in case of a collision to an inoperative position. The bow shaped impact beam (9) comprises end sections, each end section being provided with a first member. Each A-pillar is provided with a second member configured for cooperating with the first member. The first member is one of a male or female element, the second member is the other one of the male or female element. In the operative position of the bow shaped impact beam the first and the second member allow hinging of the bow shaped impact beam, while in case of a crash the first and the second members are in engagement for directing an impact force to the A-pillar.

## Description

The invention relates a truck comprising a cabin structure, the cabin structure comprising a cabin floor, opposing A-pillars, a front side extending between the opposing A-pillars and a crash absorption system arranged for absorbing an impact force on the front side in case of a collision, the crash absorption system being positioned at the front side at a vertical level above the cabin floor. The invention in particular relates to a so called low entry truck which is a type of truck that is designed with a lower cabin entry height compared to traditional trucks. These trucks are often used in urban environments for tasks such as waste collection, delivery, light distribution or municipal services. The lower entry height makes it easier and safer for drivers to enter and exit the cabin, especially when making frequent stops or performing tasks that require getting in and out of the truck multiple times. Additionally, the design of low entry trucks may provide better visibility for the driver, which can be advantageous in crowded or urban environments. Overall, low entry trucks are designed with the goal of improving driver comfort, safety, and efficiency, particularly in urban settings where there may be frequent stops and tight spaces to maneuver.

In order absorb an impact force on the front side in case of a collision, the truck is provided with a crash absorption system being positioned at the front side at a vertical level above the cabin floor as e.g. disclosed in co-pending Dutch patent application NL2037430. In case of a collision of the truck with a trailer back the crash absorption system at the front side, i.e. in front of the cowl of the truck, will distribute the initial forces of the crash impact through the A-pillars and doors of the truck to the rear of the cabin. Although such a crash absorption system provides crash impact safety the crash absorption system hinders serviceable items that are provided at the front side of the truck, i.e. in the cowl. Such serviceable items are e.g. the windscreen wiper mechanism, a HVAC filter, expansion tanks, electrical connections to the interior of the cabin and others. For accessibility to these serviceable items the cabin structure normally is provided with an (upper) grille which can be opened by means of hinges. A crash absorption system positioned at the front side at a vertical level above the cabin floor will at least impede or even make it impossible for the grille to be opened.

It is an object of the invention to provide a truck with a crash absorption system arranged for absorbing an impact force on the front side in case of a collision while at the same time allowing access to serviceable items provided at the front side of the truck.

In order to obtain this object the invention provides a truck comprising a cabin structure according to claim 1. By means of the impact beam hinges the bow shaped impact beam can be hinged from an operative position ready for absorbing an impact force on the front side in case of a collision to an inoperative position in which inoperative position access to serviceable items provided at the front side of the truck is allowed.

In an embodiment of a truck according to the invention the impact beam hinges are configured to hinge a lower edge of the bow shaped impact beam in upward direction such that the access to serviceable items can be improved. Please note that in an alternative embodiment of the invention the impact beam hinges are configured to hinge an upper edge of the bow shaped impact beam in downward direction.

In a further embodiment of a truck according to the invention the bow shaped impact beam comprises end sections, each end section being provided with a first member, wherein each A-pillar is provided with a second member configured for cooperating with the first member, the first member being one of a male or female element, the second member being the other one of the male or female element and wherein in the operative position of the bow shaped impact beam the first and the second member allow hinging of the bow shaped impact beam, while in case of a crash the first and the second members are in engagement for directing an impact force to the A-pillar. In this manner the function of hinging and positioning of the bow shaped impact beam and the function of absorbing a crash impact are separated but still provided by the cooperation of the first and second members. Due to this separation the impact beam hinges can be implemented in a relatively simple manner to hold the weight of the bow shaped impact beam but need not be strong enough to hold during a crash situation. In case of a crash the first and the second members are in engagement (i.e. are in contact with each other) for directing an impact force to the A-pillar, such that the second member and optionally the A-pillar can be implemented sufficiently strong to absorb crash impacts. Since the second member and the A-pillar are stationary or fixed objects of the cabin structure they can be made stronger or stiffer in a more easy and efficient manner. In particular each A-pillar with its second member and the cabin structure are configured to be sufficiently stiff for preventing a laterally outward deformation of the opposing A-pillars due a laterally outward force exerted thereon in case of a collision.

In a preferred embodiment of a truck according to the invention the second member is formed by a wedge shaped male member and the first member is formed by a hole in the bow shaped impact beam. In this manner a gap can be created between the wedge shaped male member and the hole to allow hinging and positioning of the bow shaped impact beam a the front side of the cabin structure, while during the initial stages of a crash situation the edges of the bow shaped impact beam around the hole will contact the wedge shaped male member to direct impact forces to the A-pillars. Please note that the invention is not limited to a wedge shaped male member but that in other embodiments of the invention the male member can have a straight or bent form as long as there is created a gap between the male member and the hole.

In a still further embodiment of a truck according to the invention the cabin structure comprises a tension bar laterally interconnecting the opposing A-pillars in an at least substantial straight line. Such a tension bar can prevent a laterally outward deformation of the opposing A-pillars due to laterally outward forces exerted during a crash impact.

In a further embodiment of a truck according to the invention the cabin structure comprises a grille at the front side of the cabin structure, the grille being connected to the cabin structure by means of grille hinges, the bow shaped impact beam being arranged behind the grille when seen in normal driving direction of the truck, wherein preferably the impact beam hinges are formed by the grille hinges

The invention will be further explained with reference to the Figures, in which a non-limiting exemplary embodiment of according to the invention is shown:
Fig. 1 schematically shows an embodiment of truck according to the invention positioned at a distance behind a trailer back T;
Fig. 2 schematically shows an embodiment of the truck of Figure 1 in contact with the trailer back T in case of a collision;
Fig. 3 schematically shows an embodiment of truck according to the invention in which the bow shaped impact beam is arranged behind the grille and positioned in the operative position;
Fig. 4 schematically shows the embodiment of Figure 3 in which the bow shaped impact beam is positioned in the inoperative position;
Figs. 5 and 6 schematically shows the embodiment of Figure 3 and 4, respectively, with the grille removed; and
Fig. 7 schematically shows a top view of an embodiment of a truck according to the invention comprising wedge shaped male members and holes.

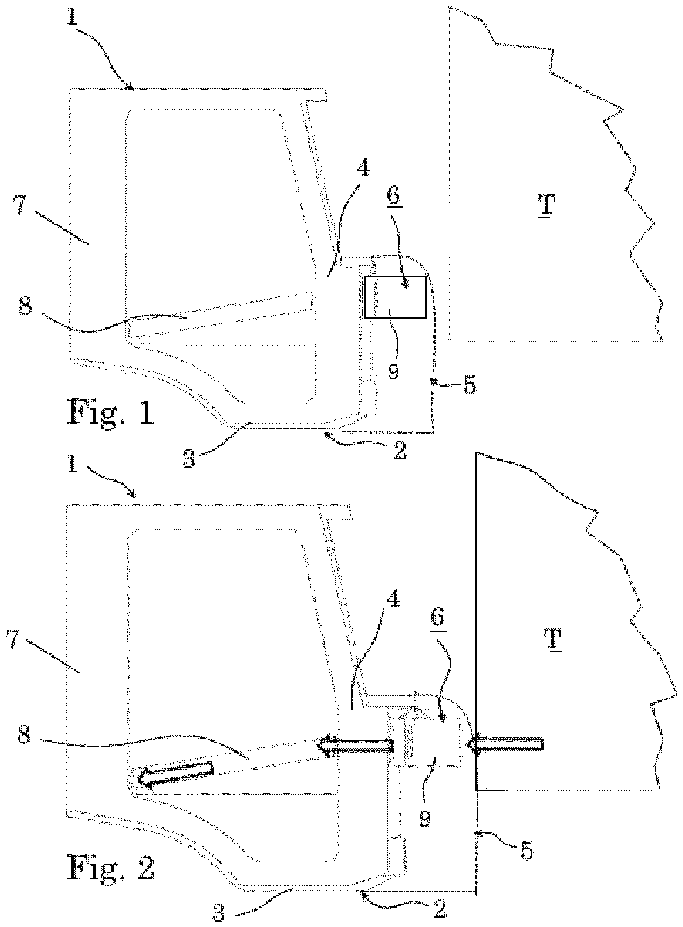

In Figure 1 an embodiment of a truck 1 according to the invention is schematically shown in side view in which the truck 1 is shown in part positioned at a distance behind a trailer back T. In this application "front" and "rear" and analogous terms are defined with regard to the usual forward driving movement of the truck 1. The truck 1 comprises a cabin structure 2 having a cabin floor 3, opposing A-pillars 4, 4', a front side 5 extending between the opposing A-pillars 4, 4' and a crash absorption system 6 arranged for absorbing an impact force on the front side 5 in case of a collision with e.g. the trailer back T. The crash absorption system 6 is positioned at the front side 5 at a vertical level above the cabin floor 3. In the shown embodiment the cabin structure 2 is also provided with a door-ring 7 in which reinforcements 8 are provided in a manner known per se.

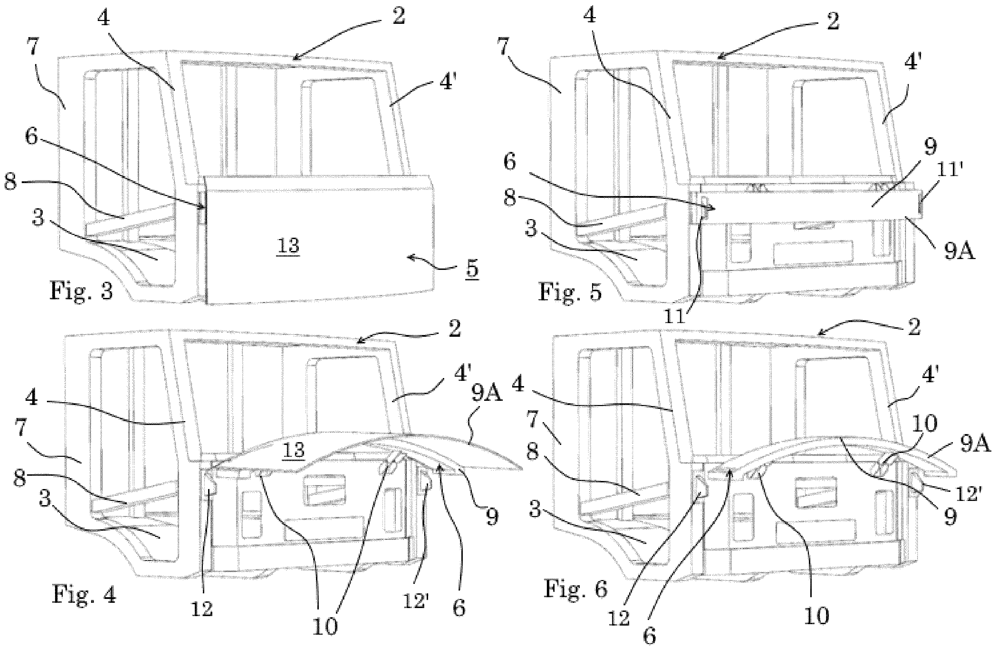

The crash absorption system 5 comprises a bow shaped impact beam 9 which is positioned between the opposing A-pillars 4, 4' and which is connected to the cabin structure 2 by means of impact beam hinges 10 for hinging the bow shaped impact beam 9 from an operative position (indicated in Figures 1, 2, 3, 5 and 7 ready for absorbing an impact force on the front side 5 in case of a collision to an inoperative position as indicated in Figures 4 and 6. In the shown embodiments the impact beam hinges 10 are configured to hinge a lower edge 9A of the bow shaped impact beam 9 in upward direction. In the embodiments shown in Figures 3 and 4 the cabin structure 2 comprise a grille 13 at the front side 5 of the cabin structure 2. The grille 13 is connected to the cabin structure 2 by means of grille hinges which in this embodiment are formed by the impact beam hinges 10. In other embodiments the grille 13 is connected to the cabin structure 2 by means of grille hinges which are separate from the impact beam hinges 10. As can best be seen in Figure 4 the bow shaped impact beam 9 is arranged behind the grille 13. Figures 5 and 6 show the same embodiment as shown in Figures 3 and 4, respectively, with the grille 13 removed to more clearly indicate the bow shaped impact beam 9.

The crash absorption system 6 absorbs and guides impact forces (as shown by the arrows in Figure 2) via the A-pillars 4, 4' to the reinforcements 8 in de door-rings 7 and in the shown embodiment towards the cabin floor 3 which latter can be stiffened in any known manner per se.

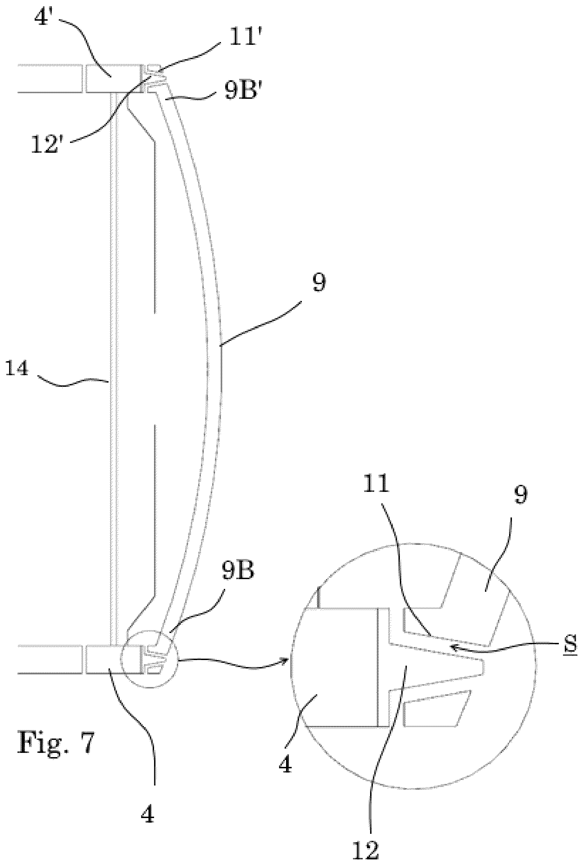

As best seen in Figure 7 the bow shaped impact beam 9 comprises end sections 9B, 9B', each end section 9B, 9B' being provided with a first member 11, 11' and each A-pillar 4, 4' is provided with a second member 12, 12' configured for cooperating with the respective first member 11, 11'. In the shown embodiments the second member 12, 12' is form by a wedge shaped male member and the first member 11, 11' is formed by a hole in the bow shaped impact beam 9. It is observed that in other embodiments of the invention the first member 11, 11' can be one of a male or female element while the second member 12, 12' can be the other one of the male or female element.

The wedge shaped male members 12, 12' and the holes 11, 11' are configured such that in the operative position of the bow shaped impact beam 9, as e.g. shown in Figure 7, there is a space S between the wedge shaped male members 12, 12' and the holes 11, 11' (as first female members) allowing hinging of the bow shaped impact beam 9, correct closure of the bow shaped impact beam 9 and the grille 13 and provides for adjustment for a proper fit of the grille 13 to other parts.. Please note that the space S is exaggerated in Figure 7. In case of a crash surfaces of the wedge shaped male members 12, 12' and the holes 11, 11' come into engagement with each other, i.e. come into contact with each other, for directing impact forces to the respective A-pillars 4, 4'. The A-pillars 4, 4' together with its wedge shaped male members 12, 12' and preferably also other parts of the cabin structure 2, such as the door-rings 7 and reinforcements 8 and cabin floor 3 are configured to be sufficiently stiff for absorbing the impact forces and preventing a laterally outward deformation of the opposing A-pillars 4, 4' due a laterally outward force exerted thereon in case of a collision. As indicated in Figure 7 a tension bar 14 laterally interconnecting the opposing A-pillars 4, 4' in an at least substantial straight line can be provided to aid in preventing a laterally outward deformation of the opposing A-pillars 4, 4'.

## Claims

1. A truck comprising a cabin structure, the cabin structure comprising a cabin floor, opposing A-pillars, a front side extending between the opposing A-pillars and a crash absorption system arranged for absorbing an impact force on the front side in case of a collision, the crash absorption system being positioned at the front side at a vertical level above the cabin floor, **characterized in that** the crash absorption system comprises a bow shaped impact beam which is positioned between the opposing A-pillars and which is connected to the cabin structure by means of impact beam hinges for hinging the bow shaped impact beam from an operative position ready for absorbing an impact force on the front side in case of a collision to an inoperative position.

2. A truck according to claim 1, wherein the impact beam hinges are configured to hinge a lower edge of the bow shaped impact beam in upward direction.

3. A truck according to claim 1 or 2, wherein the bow shaped impact beam comprises end sections, each end section being provided with a first member, wherein each A-pillar is provided with a second member configured for cooperating with the first member, the first member being one of a male or female element, the second member being the other one of the male or female element and wherein in the operative position of the bow shaped impact beam the first and the second member allow hinging of the bow shaped impact beam, while in case of a crash the first and the second members are in engagement for directing an impact force to the A-pillar.

4. A truck according to claim 3, wherein each A-pillar with its second member and the cabin structure are configured to be sufficiently stiff for preventing a laterally outward deformation of the opposing A-pillars due a laterally outward force exerted thereon in case of a collision.

5. A truck according to claim 4, wherein the second member is form by a wedge shaped male member and the first member is formed by a hole in the bow shaped impact beam.

6. A truck according to claim 4 or 5, wherein the cabin structure comprises a tension bar laterally interconnecting the opposing A-pillars in an at least substantial straight line.

7. A truck according to any one of the preceding claims, wherein the cabin structure comprise a grille at the front side of the cabin structure, the grille being connected to the cabin structure by means of grille hinges, the bow shaped impact beam being arranged behind the grille when seen in normal driving direction of the truck.

8. A truck according to claim 7, wherein the impact beam hinges are formed by the grille hinges.
